# EUROPÄISCHE PATENTANMELDUNG

(11) **EP 3 875 442 A1**
(43) Veröffentlichungstag der Anmeldung: **08.09.2021**
(21) Anmeldenummer: 21155039.7
(22) Anmeldetag: 03.02.2021
(51) Int. Cl.: C04B 33/30, C04B 33/32

(54) **VERFAHREN ZUM HERSTELLEN VON KERAMIKWAREN AUS KARBONATHALTIGEN WARENROHLINGEN**

(30) Priorität: 02.03.2020 AT 501562020
(71) Anmelder: Wienerberger AG, 1100 Wien (AT)
(72) Erfinder: RATH, Johannes, 2340 Mödling (AT)
(74) Vertreter: Gibler & Poth Patentanwälte KG

(57) **Zusammenfassung**

Bei einem Verfahren zum Herstellen von Keramikwaren aus karbonathaltigen Warenrohlingen wird vorgeschlagen, dass die karbonathaltigen Warenrohlinge in einem Brennschritt zumindest zeitweise bei einem Druck von mindestens 2 bar gebrannt werden.

## Beschreibung

Die Erfindung betrifft ein Verfahren zum Herstellen von Keramikwaren aus karbonathaltigen Warenrohlingen gemäß dem Oberbegriff des Patentanspruches 1.

Keramikwaren, beispielsweise als Baumaterial in Form von Ziegeln, sind seit langer Zeit für die Menschheit von großer Bedeutung.

Es ist bekannt, dass tonhaltige Materialien je nach Lagerstätte unterschiedliche chemische und physikalische Eigenschaften wie eine unterschiedliche Korngrößenverteilung, eine unterschiedliche chemische Zusammensetzung und beispielsweise einen unterschiedlichen Feuchtigkeitsgehalt aufweisen.

Aus Gründen des Umweltschutzes ist es vorteilhaft die Keramikwaren, vor allem bei Baumaterialien, möglichst lokal zu gewinnen und zu verarbeiten, um den Kohlenstoffdioxidausstoß durch den Transport gering zu halten.

Aus geologischen Gründen weisen einige Lagerstätten von tonhaltigen Materialien Karbonate wie beispielsweise Kalziumkarbonat auf. Der Karbonatgehalt dieser Materialien kann je nach Abbaugebiet und selbst innerhalb verschiedener Entnahmestellen in einem einzelnen Abbaugebiet stark schwanken.

Nachteilig daran ist, dass bei dem Brennen von Keramikwaren, insbesondere von Ziegeln für die Bauindustrie, aus karbonathaltigen Warenrohlingen ein beträchtlicher Anteil an Kohlenstoffdioxid freigesetzt wird.

Aufgabe der Erfindung ist es daher ein Verfahren der eingangs genannten Art anzugeben, mit welchem die genannten Nachteile vermieden werden können, mit welchem Keramikwaren aus karbonathaltigen Warenrohlingen umweltfreundlich produziert werden können.

Erfindungsgemäß wird dies durch die Merkmale des Patentanspruches 1 erreicht.

Dadurch ergibt sich der Vorteil, dass die Kohlenstoffdioxid-Emission bei dem Brennen von karbonathaltigen Warenrohlingen verringert bzw. vermieden werden kann. Durch den erhöhten Druck von mindestens 2 bar während des Brennschrittes wird die Dekomposition von Karbonaten verringert oder vermieden und es können tonhaltige Materialien mit erhöhtem Karbonatgehalt umweltfreundlich gebrannt werden. Dadurch, dass karbonathaltige Warenrohlinge umweltfreundlich gebrannt werden können, ergibt sich weiters der bedeutsame Vorteil, dass auch regionale Lagerstätten mit tonhaltigen Materialien, welche einen erhöhten Karbonatgehalt aufweisen, zur umweltfreundlichen Produktion von Keramikwaren abgebaut werden können. Hierdurch entfallen Transporte von tonhaltigen Materialien mit niedrigem Karbonatgehalt von weit entfernten Lagerstätten wodurch die bei den Transporten stets entstehende Kohlenstoffdioxid-Emission durch das Transportmittel entfällt.

Die Erfindung betrifft weiters eine Keramikware gemäß dem Oberbegriff des Patentanspruches 8.

Aufgabe der Erfindung ist es daher weiters eine Keramikware anzugeben, welche umweltschonend produziert werden kann.

Erfindungsgemäß wird dies durch die Merkmale des Patentanspruches 8 erreicht.

Die Vorteile dieser Keramikware entsprechen den Vorteilen des oben genannten Verfahrens.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Es ist ein Verfahren zum Herstellen von Keramikwaren aus karbonathaltigen Warenrohlingen vorgesehen, wobei die karbonathaltigen Warenrohlinge in einem Brennschritt zumindest zeitweise bei einem Druck von mindestens 2 bar gebrannt werden.

Es hat sich hierbei gezeigt, dass bei dem Brennen von karbonathaltigen Warenrohlingen prozessbedingt ein beträchtlicher Anteil an Kohlenstoffdioxid durch Dekomposition des Karbonats in das entsprechende Oxid, freigesetzt wird. Bei einem herkömmlichen Atmosphärendruck setzt beispielsweise die Dekomposition von Kalziumkarbonat ab einer Temperatur von 600°C ein, welche unterhalb der üblicherweise notwendigen Temperaturen beim Brennschritt zum Brennen des Tons liegt. Es hat sich allerding gezeigt, dass mit ansteigendem Druck auch die Dekompositionstemperatur von Karbonaten ansteigt.

Dadurch ergibt sich der Vorteil, dass die Kohlenstoffdioxid-Emission bei dem Brennen von karbonathaltigen Warenrohlingen verringert bzw. vermieden werden kann. Durch den erhöhten Druck von mindestens 2 bar während des Brennschrittes wird die Dekomposition von Karbonaten verringert oder vermieden und es können tonhaltige Materialien mit erhöhtem Karbonatgehalt umweltfreundlich gebrannt werden. Dadurch, dass karbonathaltige Warenrohlinge umweltfreundlich gebrannt werden können, ergibt sich weiters der bedeutsame Vorteil, dass auch regionale Lagerstätten mit tonhaltigen Materialien, welche einen erhöhten Karbonatgehalt aufweisen, zur umweltfreundlichen Produktion von Keramikwaren abgebaut werden können. Hierdurch entfallen Transporte von tonhaltigen Materialien mit niedrigem Karbonatgehalt von weit entfernten Lagerstätten wodurch die bei den Transporten stets entstehende Kohlenstoffdioxid-Emission durch das Transportmittel entfällt.

Weiters ist eine Keramikware, insbesondere hergestellt nach dem hier beschriebenen Verfahren, vorgesehen, wobei die Keramikware einen Karbonatgehalt von mindestens 0,5%, insbesondere mindestens 5%, bevorzugt mindestens 10%, besonders bevorzugt mindestens 15%, aufweist.

Die Keramikwaren können insbesondere Mauerziegel, dabei bevorzugt Hohlziegel, Dachziegel, Bodenfliesen und/oder Wandfliesen sein.

Die Keramikwaren können weiters Irdengut wie beispielsweise Baukeramik oder feuerfeste Keramik, Sinterzeug wie beispielsweise Steinzeug oder Porzellan und keramische Sondermassen wie beispielsweise Elektrokeramik sein.

Die karbonathaltigen Warenrohlinge umfassen bevorzugt tonhaltige Materialien, insbesondere Schichtsilikate.

Es kann weiters vorgesehen sein, dass die karbonathaltigen Warenrohlinge Lehme, insbesondere Ziegellehme, umfassen.

Besonders bevorzugt kann vorgesehen sein, dass die karbonathaltigen Warenrohlinge Kalziumkarbonat enthalten. Entsprechend kann auch die aus dem kalziumkarbonathaltigen Warenrohling hergestellte Keramikware Kalziumkarbonat enthalten. Insbesondere kann das Karbonat vorwiegend Kalziumkarbonat sein. Kalziumkarbonat ist hierbei ein Karbonat, welches in den Lagerstätten von keramischen Rohstoffen häufig vorkommt.

Insbesondere können die karbonathaltigen Warenrohlinge mergeligen Ton, Mergelton, Tonmergel, Mergel, Kalkmergel, Mergelkalk, mergeligen Kalk und Kalkstein umfassen.

Es kann vorgesehen sein, dass die karbonathaltigen Warenrohlinge einen Mindestkarbonatgehalt von mindestens 0,5%, insbesondere mindestens 5%, bevorzugt mindestens 10%, besonders bevorzugt mindestens 15%, aufweisen.

Es kann vorgesehen sein, dass die karbonathaltigen Warenrohlinge einen Maximalkarbonatgehalt von maximal 95%, insbesondere maximal 70%, bevorzugt maximal 55%, aufweisen.

Es kann vorgesehen sein, dass die Keramikware einen Maximalkarbonatgehalt von maximal 95%, insbesondere maximal 70%, bevorzugt maximal 55%, aufweisen.

Ungetrocknet kann der Feuchtigkeitsgehalt der karbonathaltigen Warenrohlinge je nach Abbaugebiet und den dort vorherrschenden Bedingungen insbesondere 10%-30% betragen.

Bei der Formgebung der karbonathaltigen Warenrohlinge benötigen diese einen bestimmten Feuchtigkeitsgehalt, um einfach geformt werden zu können. Der Feuchtigkeitsgehalt der karbonathaltigen Warenrohlinge kann bei der Formgebung insbesondere 5% bis 30% betragen.

Bevorzugt kann vorgesehen sein, dass die karbonathaltigen Warenrohlinge bei der Formgebung gepresst werden.

Der Feuchtigkeitsgehalt ist insbesondere der Wassergehalt der Warenrohlinge.

Es kann vorgesehen sein, dass die Ausgangsstoffe der karbonathaltigen Warenrohlinge vor der Formgebung in einem Vorbereitungsschritt gemahlen werden.

Es kann weiters vorgesehen sein, dass Zusatzstoffe zu den Ausgangsstoffen hinzugefügt werden, um die physikalischen bzw. chemischen Eigenschaften der karbonathaltigen Warenrohlinge bzw. der Keramikwaren zu beeinflussen.

Es kann hierzu vorgesehen sein, dass zu den Ausgangsstoffen der karbonathaltigen Warenrohlinge vor der Formgebung in einem Vorbereitungsschritt Zusatzstoffe und/oder Ausgangsstoffe mit einer größeren Korngröße als der Durchschnittskorngröße der in der Lagerstätte abgebauten Ausgangsstoffe, also des tonhaltigen Materials, hinzugefügt werden. Hierdurch werden aufgrund einer breiten Korngrößenverteilung bzw. durch Partikel mit einer größeren Korngröße, Hohlräume geschaffen, durch welche Luft bei der Formgebung leicht entweichen kann.

Ein Zusatzstoff mit einer größeren Korngröße ist beispielsweise unter der Bezeichnung "grog" bekannt. Hierbei handelt es sich um ein körniges Material, welches insbesondere durch das Zerkleinern bzw. Zermahlen einer Keramikware erhalten wird. Als Zusatzstoff hat "grog" beispielsweise die vorteilhaften Effekte, dass der Schrumpfeffekt und die thermische Ausdehnung des karbonathaltigen Warenrohlings bei der Trocknung reduziert werden, wodurch weiters die Wahrscheinlichkeit einer Rissbildung in den karbonathaltigen Warenrohlingen verringert wird.

Die Zusatzstoffe können beispielsweise Glas und leichte biogene Materialen umfassen.

Die biogenen Materialien können insbesondere organischen Kohlenstoff umfassen, welcher bevorzugt während des Brennschrittes verbrennt, wodurch die Dichte der Keramikware verringert werden kann. Biogene Materialien, die organischen Kohlenstoff umfassen können beispielsweise Sägemehl, Reishülsen und Samen sein.

Vor dem Brennen kann bevorzugt der Feuchtigkeitsgehalt der karbonathaltigen Warenrohlinge reduziert werden, da sonst bei abruptem Erhitzen der feuchten karbonathaltigen Warenrohlinge eine Rissbildung in den karbonathaltigen Warenrohlingen erfolgen kann.

Es kann bevorzugt vorgesehen sein, dass die karbonathaltigen Warenrohlinge in einem dem Brennschritt vorhergehenden Trocknungsschritt bei Umgebungsdruck getrocknet werden, wodurch eine einfache Ausbildung eines Trockners ermöglicht wird.

Der Umgebungsdruck kann insbesondere der Normaldruck bei ca. 1 bar sein.

Es kann alternativ vorgesehen sein, dass die karbonathaltigen Warenrohlinge bei einem höheren Druck als dem Umgebungsdruck getrocknet werden.

Mittels des Trockners können die karbonathaltigen Warenrohlinge in dem Trocknungsschritt bei einem kontrollierten Temperatur-Luftfeuchteverhältnis schonend erwärmt werden und in den karbonathaltigen Warenrohlingen befindlicher Feuchtigkeit wird ausreichend Zeit gegeben, um aus den karbonathaltigen Warenrohlingen zu diffundieren, wodurch eine mögliche Rissbildung verringert wird.

Es kann vorgesehen sein, dass die karbonathaltigen Warenrohlinge in dem Trocknungsschritt übereinander gestapelt getrocknet werden. Dies kann beispielsweise auf Paletten, die übereinander angeordnet sind, erfolgen, um Platz zu sparen.

Es kann alternativ vorgesehen sein, dass die karbonathaltigen Warenrohlinge in dem Trocknungsschritt nebeneinander angeordnet sind.

Es kann bevorzugt vorgesehen sein, dass die karbonathaltigen Warenrohlinge mittels einer Fördereinrichtung, beispielsweise mittels eines Wagens, in den Trockner befördert werden.

Es kann bevorzugt vorgesehen sein, dass getrocknete karbonathaltige Warenrohlinge nach dem Trocknungsschritt einen Feuchtigkeitsgehalt von circa 3% aufweisen.

Ausreichend getrocknete karbonathaltige Warenrohlinge können in einem Ofen gebrannt werden, wodurch die gewünschten physikalischen, chemischen und mechanische Eigenschaften der gebrannten Keramikware eingestellt werden.

Eine Anlage zum Brennen von karbonathaltigen Warenrohlingen kann neben einem Trockner einen Ofen umfassen, insbesondere einen Industrieofen, wobei in dem Trockner die karbonathaltigen Warenrohlinge getrocknet werden und in dem Industrieofen getrocknete karbonathaltige Warenrohlinge gebrannt werden.

Der Ofen kann insbesondere ein Kammerofen sein.

Besonders bevorzugt ist der Ofen ein von Wänden umschlossener Raum, in dem den karbonathaltigen Warenrohlingen Wärme und Druck zugeführt wird, also ein Autoklav.

Es kann bevorzugt vorgesehen sein, dass die karbonathaltigen Warenrohlinge mittels einer Fördereinrichtung, beispielsweise mittels eines Wagens, in den Industrieofen befördert werden.

In dem Brennschritt werden die karbonathaltigen Warenrohlinge zumindest zeitweise bei einem Druck von mindestens 2 bar gebrannt. Der Druck kann beim Brennschritt auch variieren, wobei dieser zumindest in einem gewissen Zeitabschnitt mindestens 2 bar beträgt. Der Druck kann aber auch im gesamten Brennschritt mindestens 2 bar betragen. Hierdurch ergibt sich, wie eingangs erwähnt, der Vorteil, dass die Dekomposition von Karbonaten in den Warenrohlingen stark verringert wird.

Besonders bevorzugt kann vorgesehen sein, dass die karbonathaltigen Warenrohlinge in dem Brennschritt zumindest zeitweise bei einem Druck von mindestens 4 bar, bevorzugt mindestens 7 bar, insbesondere mindestens 10 bar, gebrannt werden. Dadurch kann die Dekomposition der Karbonate weiter verringert bzw. gänzlich vermieden werden.

Es kann weiters bevorzugt vorgesehen sein, dass die karbonathaltigen Warenrohlinge in dem Brennschritt bei einem Druck von maximal 40 bar, bevorzugt maximal 30 bar, insbesondere maximal 20 bar, gebrannt werden. In derartigen Druckbereichen kann das Verfahren in einem industriellen Maßstab gut umgesetzt werden.

Je nach Karbonatgehalt der karbonathaltigen Warenrohlinge kann im Brennschritt ein unterschiedlicher Druck verwendet werden, um die Dekomposition des Karbonats zu verringern.

Es kann bevorzugt vorgesehen sein, dass die karbonathaltigen Warenrohlinge während des Brennschrittes übereinander angeordnet sind, wodurch Platz gespart wird.

Es kann alternativ vorgesehen sein, dass die karbonathaltigen Warenrohlinge während des Brennschrittes nebeneinander angeordnet sind.

Besonders bevorzugt kann vorgesehen sein, dass die karbonathaltigen Warenrohlinge in dem Brennschritt zumindest zeitweise bei einer Temperatur von mindestens 600°C, insbesondere mindestens 850°C, bevorzugt mindestens 1050°C, gebrannt werden. Durch diese Temperatur hat die Keramikware, insbesondere eine als Mauerziegel ausgebildete Keramikware, eine ausreichende Festigkeit.

Bevorzugt kann weiters vorgesehen sein, dass die karbonathaltigen Warenrohlinge in dem Brennschritt bei einer Temperatur von maximal 1200°C, insbesondere maximal 1150°C, bevorzugt maximal 1100°C, gebrannt werden. Dadurch kann die Dekomposition von Karbonaten gering gehalten werden.

Im Brennschritt kann insbesondere der zeitliche Temperaturverlauf und/oder Druckverlauf vorgegeben werden.

Hierbei ist die Dekompositionstemperatur, also die Zerfallstemperatur, von Karbonaten druckabhängig. Die Dekompositionstemperatur kann auch von anderen Faktoren wie dem Kohlenstoffdioxid-Partialdruck abhängig sein.

Besonders bevorzugt kann vorgesehen sein, dass die Temperatur oder der Temperaturverlauf und der dazugehörige Druck oder der Druckverlauf derart gewählt werden, dass eine Dekomposition des Karbonats vermieden wird. Das kann dadurch erreicht werden, dass die Dekompositionstemperatur des Karbonats durch ein entsprechendes Temperatur-Druck-Paar nicht erreicht wird. Wenn die Temperatur beim Brennen erhöht wird kann daher entsprechend der Druck erhöht werden, um die Dekomposition des Karbonats zu verringern bzw. vermeiden.

Der Ofen kann insbesondere mehrere Brenner für die Energiezufuhr aufweisen.

Bevorzugt kann vorgesehen sein, dass der Ofen eine elektrische Heizung, insbesondere eine Wandheizung, aufweist.

Bevorzugt kann vorgesehen sein, dass der Ofen ein Umluftgebläse zum Erzeugen einer Strömung innerhalb des Ofens während des Brennens aufweist.

Nachfolgend werden Grundsätze für das Verständnis und die Auslegung gegenständlicher Offenbarung angeführt.

Prozentangaben beziehen sich auf Gewichtsprozent, sofern es sich aus dem Kontext nicht anders ergibt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Bei Wertebereichen sind die Endpunkte mitumfasst, sofern es sich aus dem Kontext nicht anders ergibt.

## Patentansprüche

1. Verfahren zum Herstellen von Keramikwaren aus karbonathaltigen Warenrohlingen, **dadurch gekennzeichnet, dass** die karbonathaltigen Warenrohlinge in einem Brennschritt zumindest zeitweise bei einem Druck von mindestens 2 bar gebrannt werden.

2. Verfahren nach Anspruch 1, **dadurch gekennzeichnet, dass** die karbonathaltigen Warenrohlinge in dem Brennschritt zumindest zeitweise bei einem Druck von mindestens 4 bar, bevorzugt mindestens 7 bar, insbesondere mindestens 10 bar, gebrannt werden.

3. Verfahren nach Anspruch 1 oder 2, **dadurch gekennzeichnet, dass** die karbonathaltigen Warenrohlinge in dem Brennschritt bei einem Druck von maximal 40 bar, bevorzugt maximal 30 bar, insbesondere maximal 20 bar, gebrannt werden.

4. Verfahren nach einem der Ansprüche 1 bis 3, **dadurch gekennzeichnet, dass** die karbonathaltigen Warenrohlinge in einem dem Brennschritt vorhergehenden Trocknungsschritt bei Umgebungsdruck getrocknet werden.

5. Verfahren nach einem der Ansprüche 1 bis 4, **dadurch gekennzeichnet, dass** die karbonathaltigen Warenrohlinge in dem Brennschritt zumindest zeitweise bei einer Temperatur von mindestens 600°C, insbesondere mindestens 850°C, bevorzugt mindestens 1050°C, gebrannt werden.

6. Verfahren nach einem der Ansprüche 1 bis 5, **dadurch gekennzeichnet, dass** die karbonathaltigen Warenrohlinge in dem Brennschritt bei einer Temperatur von maximal 1200°C, insbesondere maximal 1150°C, bevorzugt maximal 1100°C, gebrannt werden.

7. Verfahren nach einem der Ansprüche 1 bis 6, **dadurch gekennzeichnet, dass** die karbonathaltigen Warenrohlinge Kalziumkarbonat enthalten.

8. Keramikware, insbesondere hergestellt nach einem Verfahren gemäß einem der Ansprüche 1 bis 7, **dadurch gekennzeichnet, dass** die Keramikware einen Karbonatgehalt von mindestens 0,5%, insbesondere mindestens 5%, bevorzugt mindestens 10%, besonders bevorzugt mindestens 15%, aufweist.
